# EUROPÄISCHE PATENTANMELDUNG

(11) **EP 0 632 658 A2**
(43) Veröffentlichungstag der Anmeldung: **04.01.1995**
(21) Anmeldenummer: 94109810.5
(22) Anmeldetag: 24.06.1994
(51) Int. Cl.: H04N 7/14, H04N 7/15

(54) **Videokonferenzsystem**

(30) Priorität: 30.06.1993 DE 4321674
(71) Anmelder: Alcatel SEL Aktiengesellschaft, D-70435 Stuttgart (DE); ALCATEL N.V., NL-2288 BH Rijswijk (NL)
(72) Erfinder: George, Lothar, D-10319 Berlin (DE); Buchelt, Andreas, D-13088 Berlin (DE)
(74) Vertreter: Schätzle, Albin, Dipl.-Phys.

(57) **Zusammenfassung**

In Videokonferenzsystemen (VS) wird das einem Vollbild entsprechende Bildsignal einer jeder Teilnehmerstation (T) zu einer Videokonferenzzentrale (Z) übertragen. Diese wandelt das Bildsignal einiger Teilnehmerstationen in ein einem Kleinbild entsprechenden Bildsignal. Dabei wird eine unnötig große Übertragungskapazität eines Telekommunikationsnetzes (N) belegt.

Es wird erfindungsgemäß nur die Bilddatenmenge von einer der Teilnehmerstationen (T) zu der Videokonferenzzentrale (Z) übertragen, die der minimal notwendigen Bilddatenmenge entspricht, die zur Erfüllung der aktuellen Anforderungen der weiteren Teilnehmerstationen erforderlich ist.

## Beschreibung

Die vorliegende Erfindung betrifft ein Videokonferenzsystem gemäß dem Oberbegriff des Patentanspruchs 1 und eine Teilnehmerstation und eine Videokonferenzzentrale für dieses Videokonferenzsystem.

Ein solches Videokonferenzsystem ist aus der veröffentlichten Europäischen Patentanmeldung 0 515 703 A1 bekannt. In dem dort beschriebenen Videokonferenzsystem ist eine Videokonferenzzentrale über Anpassungsschaltungen (interface circuits) wie ein normaler Teilnehmer an eine Vermittlungsstelle angeschlossen. Weiterhin sind n Teilnehmerstationen mit der Vermittlungsstelle verbunden. Die Vermittlungsstelle vermittelt Punkt-zu-Punkt Kanäle zwischen den Teilnehmerstationen und der Videokonferenzzentrale und alle Steuerbefehle, die nicht den Auf- und Abbau derartiger Kanäle betreffen, werden in einer für die Vermittlungsstelle transparenten Weise zwischen den Teilnehmerstationen und der Videokonferenzzentrale ausgetauscht.

Aus der Europäischen Patentschrift 0 153 903 B1 ist bekannt, daß bei derartigen Videokonferenzsystemen von jeder an der Videokonferenz teilnehmenden Teilnehmerstation eine einem Vollbild entsprechende Bilddatenmenge zu der Videokonferenzzentrale übertragen wird.

In den bekannten Videokonferenzsystemen kann jeder Teilnehmer die Darstellungsweise, insbesondere die Bildgröße, der übrigen Teilnehmer auf seinem Bildschirm individuell festlegen. D.h., er kann sich ein Mischbild zusammensetzen, in dem u.a. ein oder mehrere Teilnehmer gleichzeitig als Kleinbilder auf seinem Bildschirm dargestellt werden. Ein solches Kleinbild entspricht einer vergröberten Abbildung des von der jeweiligen Teilnehmerstation zur Videokonferenzzentrale übertragenen Vollbildes, das in der Videokonferenzzentrale in die vergröberte Abbildung gewandelt wird, bevor es von der Videokonferenzzentrale zu dem das Mischbild wünschenden Teilnehmer übermittelt wird. Dabei wird die Übertragung eines Standbildes auf die gleiche Weise durchgeführt, wie die eines Bewegtbildes des Teilnehmers.

Es ist die Aufgabe der vorliegenden Erfindung ein Videokonferenzsystem anzugeben, daß eine unnötige große Belegung an Übertragungskapazität eines Telekommunikationsnetzes vermeidet.

Diese Aufgabe ist erfindungsgemäß durch die Lehre des Patentanspruchs 1 gelöst. Das beanspruchte Videokonferenzsystem enthält eine erfindungsgemäße Teilnehmerstation nach der Lehre des Patentanspruchs 2 und eine erfindungsgemäße Videokonferenzzentrale nach der Lehre des Patentanspruchs 3.

Ein Vorteil der erfindungsgemäßen Lösung ist, daß sie den Videokonferenzanwendern in Telekommunikationsnetzen mit einer Berechnung der Gebühren nach der tatsächlich übertragenen Informationsmenge eine deutliche Gebühreneinsparung verschafft.

Weitere vorteilhafte Ausgestaltungen der Erfindung sind den abhängigen Patentansprüchen zu entnehmen.

Zum besseren Verständnis der Erfindung ist im folgenden ein Ausführungsbeispiel anhand einer Figur beschrieben.

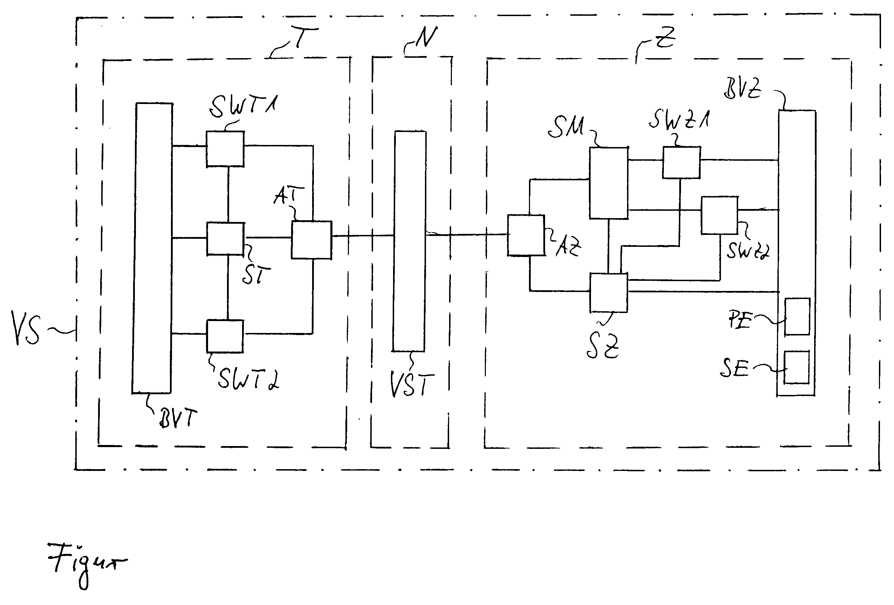

Die Figur zeigt das Ausführungsbeispiel eines im Blockschaltbild vereinfacht dargestellten erfindungsgemäßen Videokonferenzsystems.

Ein in der Figur abgebildetes Ausführungsbeispiel zeigt ein Videokonferenzsystem VS mit einer Teilnehmerstation T, die über ein Telekommunikationsnetz N mit einer Vermittlungsstelle VST an eine Videokonferenzzentrale Z angeschlossen ist.

Das Telekommunikationsnetz N kann ein beliebiges Telekommunikationsnetz sein und arbeitet im vorliegenden Ausführungsbeispiel nach dem bekannten Asynchronous Transfer Mode (ATM). Die Vermittlungsstelle VST ist infolgedessen eine ATM-Vermittlungsstelle, wie sie z.B. in dem Artikel "Das ATM-Koppelfeld von Alcatel und seine Eigenschaften" von D. Boettle und U.A. Henrion, Elektrisches Nachrichtenwesen, Band 64, Nummer 2/3, 1990 beschrieben ist. An die Vermittlungsstelle VST sind eine Vielzahl von weiteren Teilnehmerstationen angeschlossen, die hier nicht genauer beschrieben werden, da sie im Aufbau der Teilnehmerstation T entsprechen. Alle Verbindungen von und zu der Vermittlungsstelle VST sind bidirektionale Verbindungen.

Die Teilnehmerstation T besteht u.a. aus einer ersten Anpassungseinheit AT, die leitungsseitig die aus dem Telekommunikationsnetz N ankommenden Signale zur weiteren Verarbeitung an die Teilnehmerstation T anpaßt und umgekehrt. Sie enthält u.a. einen Multiplexer/Demultiplexer, der insbesondere Bild-, Sprach-, Steuer- und Zeichengabedaten verarbeitet. Die Verarbeitung der Sprachdaten ist bekannt und nicht erfindungswesentlich und wird daher im vorliegenden Ausführungsbeispiel nicht weiter behandelt. Die erste Anpassungseinheit AT ist mit einer ersten Steuerung ST, einem ersten SWT1 und einem zweiten SWT2 Signalwandler verbunden, die wiederum jeweils mit einer ersten Bildverarbeitungseinheit BVT verbunden sind.

An die erste Bildverarbeitungseinheit BVT sind eine Kamera, ein Bildschirm, ein Lautsprecher und ein Mikrophon angeschlossen, die in die Figur nicht eingezeichnet sind.

Die Videokonferenzzentrale Z besteht u.a. aus einer zweiten Anpassungseinheit AZ, die leitungsseitig die aus dem Telekommunikationsnetz N ankommenden Signale zur weiteren Verarbeitung an die Videokonferenzzentrale Z anpaßt und umgekehrt. Sie enthält u.a. einen Multiplexer/Demultiplexer, der insbesondere Bild-, Sprach-, Steuer- und Zeichengabedaten verarbeitet. Die zweite Anpassungseinheit AZ ist mit einer zweiten Steuerung SZ und einer Schaltmatrix SM verbunden. Die Schaltmatrix SM hat eine Verbindung zu der zweiten Steuerung SZ und zu einem ersten SWZ1 und einem zweiten SWZ2 Signalwandler, die jeweils auch mit der zweiten Steuerung SZ und einer zweiten Bildverarbeitungseinheit BVZ verbunden sind. Die zweite Steuerung SZ ist ebenfalls mit der zweiten Bildverarbeitungseinheit BVZ verbunden. Alle beschriebenen Verbindungen innerhalb der Videokonferenzzentrale Z und innerhalb der Teilnehmerstation T sind bidirektionale Verbindungen.

Während der Videokonferenz mit wenigstens drei Teilnehmern wird von jeder der zugehörigen drei Teilnehmerstationen ein Bild zur Videokonferenzzentrale Z übertragen. Das Bild kann sowohl ein Bewegt- als auch ein Standbild sein. Um ein optimales Auffassen der augenblicklichen Videokonferenzsituation für jeden Teilnehmer zu gewährleisten, wird auf dessen Bildschirm einer der Teilnehmer als Großbild und die übrigen Teilnehmer als Kleinbild oder überhaupt nicht dargestellt. Die Kleinbilddarstellung entspricht dabei einer kleineren Informationsmenge und damit auch weniger Bilddaten als die Großbilddarstellung.

Für die Teilnehmerstation T bedeutet das, daß das mit der an die erste Bildverarbeitungseinheit BVT angeschlossenen Kamera aufgenommene Bild mittels des ersten SWT1 oder des zweiten SWT2 Signalwandlers in eine zur Übertragung über das Telekommunikationsnetz N passende Form gewandelt wird. Der erste SWT1 und der zweite SWT2 Signalwandler arbeiten dabei jeweils nach geeigneten Algorithmen, die als nicht erfindungsrelevante Teilfunktion die Kodierung des Bildsignals in ein Leitungssignal durchführen. Diese Algorithmen könen beispielsweise die von der ISO MPEG (Motion Picture Expert Group) empfohlenen Kompressionsalgorithmen sein. SWT1 kodiert das von der Kamera aufgenommene Bild direkt als Großbild, während SWT2 das von der Kamera aufgenommene Bild vor der Kodierung in das Leitungssignal in ein Kleinbild wandelt. Das Kleinbild repräsentiert dabei eine minimal notwendige Bilddatenmenge. In welcher dieser beiden möglichen Darstellungsformen die Bilddaten der Teilnehmerstation T nun zur Videokonferenzzentrale Z übertragen werden, hängt davon ab, welche Darstellungsform die beiden weiteren Teilnehmerstationen fordern. Fordern die beiden weiteren Teilnehmerstationen ein Kleinbild von der Teilnehmerstation T, dann werden die von dem zweiten Signalwandler SWT2 kodierten Bilddaten der Teilnehmerstation T zur Videokonferenzzentrale Z übertragen. Fordert wenigstens eine der beiden weiteren Teilnehmerstationen das Großbild von der Teilnehmerstation T, dann werden die von dem ersten Signalwandler SWT1 kodierten Bilddaten der Teilnehmerstation T zur Videokonferenzzentrale Z übertragen. Die Information welche Darstellungsform gerade von den weiteren Teilnehmerstationen verlangt wird, enthalten die von der Videokonferenzzentrale Z zur Teilnehmerstation T übertragenen Steuerdaten. Die erste Steuerung ST der Teilnehmerstation T veranlaßt dann mittels interner Steuerbefehle, daß das Bildsignal der geforderten Darstellungsform entsprechend entweder über SWT1 oder SWT2 zur Videokonferenzzentrale Z übertragen wird.

In der Videokonferenzzentrale Z veranlaßt die zweite Steuerung SZ die Schaltmatrix SM aufgrund der Steuerdaten derart, daß das vom ersten Signalwandler SWT1 der Teilnehmerstation T kommende Bildsignal zum ersten Signalwandler SWZ1 der Videokonfernzzentrale Z und das vom zweiten Signalwandler SWT2 der Teilnehmerstation kommende Bildsignal zum zweiten Signalwandler SWZ2 der Videokonferenzzentrale Z geleitet wird.

Der erste Signalwandler SWZ1 der Videokonferenzzentrale Z arbeitet nach dem gleichen Algorithmus wie der erste Signalwandler SWT1 der Teilnehmerstation T und der zweite Signalwandler SWZ2 der Videokonferenzzentrale Z nach dem gleichen Algorithmus wie der zweiten Signalwandler SWT2 der Teilnehmerstation T. Das einem Großbild entsprechende und von SWZ1 gewandelte Bildsignal oder das einem Kleinbild entsprechende und von SWZ2 gewandelte Bildsignal wird der zweiten Bildverarbeitungseinheit BVZ zugeführt. In der zweiten Bildverarbeitungseinheit BVZ wird das Bildsignal in bekannter Weise mit den von den weiteren Teilnehmerstationen der Videokonferenz zur Videokonferenzzentrale Z übertragenen Bildsignalen in die von jedem Teilnehmer der Videokonferenz individuell geforderte Darstellungsform gemischt. Diese Bildsignalmischung kann z.B. auf der Grundlage der in der Europäischen Patentanmeldung 0 493 881 A2 beschriebenen Verfahren durchgeführt werden. Die individuellen Bildsignalmischungen werden dann zu den jeweiligen Teilnehmerstationen der Videokonferenz zurückübertragen.

Obwohl jeder Teilnehmer der Videokonferenz die Darstellungsform der übrigen Teilnehmer auf seinem Bildschirm frei wählen kann, wird meistens der augenblickliche Sprecher als Großbild und die inaktiven Teilnehmer als Kleinbilder dargestellt. Zur Sprechererkennung ist in die zweite Bildverarbeitungseinheit BVZ eine Sprechererkennungseinheit SE integriert. Diese kann nach unterschiedlichen bekannten Verfahren arbeiten. Eines ist z.B. die Auswertung der Tonsignale einer jeden Teilnehmerstation nach ihrer Lautstärke. D.h., die Sprechererkennungseinheit SE wählt denjenigen Teilnehmer als Sprecher, von dem sie das Tonsignal mit der größten Lautstärke empfängt.

Bei sogenannten Broadcast-Videokonferenzen wird eine vortragsorientierte Kommunikation unterstützt. Das bedeutet, ein Teilnehmer der Videokonferenz ist der Referent und die übrigen Teilnehmer seine Zuhörer, die nur zeitweise aktiv an der Videokonferenz teilnehmen. In diesem Fall kann sich der referierende Teilnehmer mittels eines definierten Steuerbefehls eine Priorität erteilen, um auf den Bildschirmen der Teilnehmer als Großbild zu erscheinen. Dazu ist in die zweite Bildverarbeitungseinheit BVZ eine Prioritätserteilungseinheit PE integriert.

In den beiden genannten Fällen generieren die Sprechererkennungseinheit SE und die Prioritätserteilungseinheit PE Steuerdaten, die die beteiligten Komponenten des erfindungsgemäßen Videokonferenzsystem VS veranlassen, in der beschriebenen Weise Bildsignale über das Telekommunikationsnetz N zu übertragen.

Im vorliegenden Ausführungsbeispiel haben die Teilnehmerstation T und die Videokonferenzzentrale Z jeweils zwei Signalwandler, die nach zwei unterschiedlichen Algorithmen arbeiten und die es daher ermöglichen, die Bilddaten in ein Klein- oder in ein Großbild zu kodieren und zu dekodieren. Es ist auch möglich, neben dem Klein- und dem Großbild noch weitere Bildformate zu erhalten, wenn man eine entsprechend zusätzliche Anzahl von Signalwandlern in der Teilnehmerstation T und der Videokonferenzzentrale Z vorsieht. Es ist auch möglich Signalwandler einzusetzen, die nach mehreren unterschiedlichen Algorithmen arbeiten können, sogenannte Multinormensignalwandler. Dann benötigt man anstelle zweier oder mehrerer Signalwandler in der Teilnehmerstation T oder der Videokonferenzzentrale Z ausschließlich jeweils einen solchen Multinormensignalwandler, der von der Steuerung der jeweiligen Komponente des Videokonferenzsystems VS entsprechend der augenblicklich geforderten Darstellungsform gesteuert wird.

## Patentansprüche

1. Videokonferenzsystem (VS) mit n Teilnehmerstationen (T), die über ein Telekommunikationsnetz (N) mit einer Videokonferenzzentrale (Z) verbunden sind,
**dadurch gekennzeichnet**, daß jede der n Teilnehmerstationen (T) ein Bewegt- oder Standbild auf wenigstens zwei unterschiedliche Arten, die unterschiedliche Datenmengen des Bewegt- oder Standbildes erzeugen, kodieren kann und die Videokonferenzzentrale (Z) diese wenigstens zwei unterschiedlich kodierten Bewegt- oder Standbilder der jeweiligen Teilnehmerstationen (T) empfangen und dekodieren kann und daß in Abhängigkeit von der Darstellungsform des Bewegt- oder Standbildes, die aktuell von den weiteren, an der Videokonferenz teilnehmenden Teilnehmerstationen gefordert wird, das Bewegt- oder Standbild von jeder der Teilnehmerstationen (T) derart zu der Videokonferenzzentrale (Z) übertragen wird, daß eine minimal notwendige Datenmenge über das Telekommunikationsnetz (N) übertragen wird.

2. Teilnehmerstation (T) für ein Videokonferenzsystem (VS) nach Anspruch 1,
dadurch gekennzeichnet, daß sie wenigstens zwei Signalwandler (SWT1 SWT2) hat, die nach unterschiedlichen Algorithmen arbeiten und daß sie ein Steuermittel (ST) hat, das aufgrund von zu der Teilnehmerstation (T) übertragenen Steuerdaten ein Bewegt- oder Standbild auf einen der wenigstens zwei Signalwandler (SWT1, SWT2) schalten kann.

3. Videokonferenzzentrale (Z) für ein Videokonferenzsystem (VS) nach Anspruch 1,
dadurch gekennzeichnet, daß sie n erste Signalwandler (SWZ1), die nach einem ersten Algorithmus arbeiten, und n zweite Signalwandler (SWZ2), die nach einem zweiten Algorithmus arbeiten, hat;
daß sie eine Schaltmatrix (SM) hat, die es ermöglicht, eine Vielzahl von einem Bewegt- oder Standbild entsprechenden, ankommenden, kodierten Bilddaten mit Hilfe eines Steuermittels (SZ) und ankommender Steuerdaten entweder auf einen der n ersten (SWZ1) Signalwandler oder auf einen der n zweiten (SWZ2) Signalwandler zu schalten.

4. Videokonferenzsystem nach Anspruch 1,
dadurch gekennzeichnet, daß die n Teilnehmerstationen (T) Teilnehmerstationen gemäß Anspruch 2 sind;
daß die Videokonferenzzentrale (Z) eine Videokonferenzzentrale gemäß Anspruch 3 ist und daß aufgrund eines Austausches von Steuerdaten zwischen jeweils einer der n Teilnehmerstationen (T) und der Videokonferenzzentrale (Z) ein erster (SWT1) oder ein zweiter (SWT2) Signalwandler der jeweiligen Teilnehmerstation (T) und über die Schaltmatrix (SM) entsprechend einer der ersten (SWZ1) oder einer der zweiten (SWZ2) Signalwandler der Videokonferenzzentrale (Z) paarweise angesteuert werden.

5. Videokonferenzsystem nach Anspruch 1,
dadurch gekennzeichnet, daß das Telekommunikationsnetz (N) ein paketorientiertes Telekommunikationsnetz ist.

6. Videokonferenzsystem nach Anspruch 1,
dadurch gekennzeichnet, daß es ein Mittel (SE) hat, das den augenblicklichen Sprecher während einer Videokonferenz ermitteln kann.

7. Videokonferenzsystem nach Anspruch 1,
dadurch gekennzeichnet, daß es ein Mittel (PE) hat, mit dem einem bestimmten Teilnehmer der Videokonferenz eine Priorität erteilt werden kann.
